# EUROPEAN PATENT SPECIFICATION

(11) **EP 3 043 118 B1**
(45) Date of publication and mention of the grant of the patent: **04.10.2017**
(21) Application number: 15202910.4
(22) Date of filing: 29.12.2015
(51) Int. Cl.: F24F 1/00, F24F 1/08

(54) **AIR CONDITIONER**
KLIMAANLAGE
CLIMATISEUR

(30) Priority: 12.01.2015 KR 20150004178
(43) Date of publication of application: 13.07.2016
(73) Proprietor: LG Electronics Inc., Seoul 07336 (KR)
(72) Inventor: SHIN, Kwangho, 08592 Seoul (KR); JEONG, Hojong, 08592 Seoul (KR); CHUNG, Minho, 08592 Seoul (KR); CHOI, Song, 08592 Seoul (KR)
(74) Representative: Vossius & Partner Patentanwälte Rechtsanwälte mbB

(56) References cited:
- EP-A2- 1 288 592
- US-A1- 2008 034 777

## Description

An air conditioner is disclosed herein.

An air conditioner is an apparatus which cools or warms an interior, or purifies indoor air to provide a comfortable indoor environment to a user.

The air conditioner may be classified into an electric heat pump (EHP) type using electric power, and a gas heat pump (GHP) type using a gas fuel such as LPG and LNG according to a power source for driving a compressor of an outdoor unit. Here, in the GHP type, an engine is operated by burning the gas fuel, and thus the compressor is driven.

In the above-described EHP type air conditioner, the compressor may be easily controlled through control of a current, and also the compressor may be driven through the control of the current, even when external air has a low temperature, and thus the compressor may be easily driven.

However, in the above-described GHP type air conditioner, since the engine using the gas fuel such as LPG and LNG should be driven, it is not appropriate to respond to a partial load, and also when the external air has a low temperature, like in winter, startability of the engine is low.

Meanwhile, a background technique of the present invention is disclosed in Korean Patent Publication No.10-2005-0043089.

US 2008/0034777 A1 discloses a gas heat pump system powered by natural gas, propane or similar gaseous fuel, the system using heat recovery and heat addition to manage efficiently heating and cooling cycles.

EP 1 288 592 A2 describes a gas heat pump type air conditioning device comprising a compression device having a gas engine driving source and forming a refrigerant cycle by circulating a refrigerant, an engine coolant-water system, a channel change switching device, a bypass channel which is provided with the channel change switching device in the engine-coolant water system downstream of the gas engine, and an engine coolant-water heating device provided in the bypass channel, wherein waste heat exhausted from the gas engine is collected in the engine-coolant-water and the refrigerant is heated by the engine-coolant-water so as to enhance air-heating-capacity.

The present invention is directed to providing an air conditioner which has improved startability and high efficiency. The air conditioner according to the present invention is defined in independent claim 1; the dependent claims describe embodiments of the invention.

According to an aspect of the present invention, there is provided an air conditioner including at least one indoor unit; an electric heat pump (EHP) outdoor unit connected with the at least one indoor unit, and having a first compressor driven using electric power, and a first outdoor heat exchanger; and a gas heat pump (GHP) outdoor unit connected with the at least one indoor unit, and having an engine part driven through a combustion gas, a second compressor driven by receiving driving force from the engine part, and a second outdoor heat exchanger, wherein the GHP outdoor unit includes an engine part circulation pipe in which a refrigerant flowing through the EHP outdoor unit can be introduced and then supplied to the engine part in order to heat the engine part.

The GHP outdoor unit may include a GHP gas pipe which connects a discharge side of the second compressor with the at least one indoor unit, and a GHP liquid pipe which connects the second outdoor heat exchanger with the at least one indoor unit, and the engine part circulation pipe is coupled to the GHP gas pipe and the GHP liquid pipe.

The engine part circulation pipe may include a first end which is coupled to the GHP gas pipe, and a second end which is coupled to the GHP liquid pipe.

The GHP outdoor unit may include a first circulation pipe which includes the first end and extends from the GHP gas pipe to the engine part, and a second circulation pipe which includes the second end and extends from the GHP liquid pipe to the engine part.

The GHP outdoor unit may further include a third circulation pipe which is connected to the first circulation pipe and the second circulation pipe, and exchanges heat with the engine part.

The third circulation pipe may be installed to be in contact with or close to the engine part.

The air conditioner may further include a circulation control valve which is installed at the first circulation pipe or the second circulation pipe and controls a flow rate of the refrigerant supplied from the EHP outdoor unit.

The EHP outdoor unit may include an EHP gas pipe which connects a discharge side of the first compressor with the at least one indoor unit, and an EHP liquid pipe which connects the first outdoor heat exchanger with the at least one indoor unit.

The air conditioner may further include an indoor unit gas pipe which connects the EHP gas pipe with the GHP gas pipe, and an indoor unit liquid pipe which connects the EHP liquid pipe with the GHP liquid pipe.

The EHP outdoor unit may further include a first connection valve which is opened so that the refrigerant compressed in the first compressor flows to the indoor unit gas pipe, and a second connection valve which is opened so that the refrigerant flowing through the indoor unit flows to the first outdoor heat exchanger.

The GHP outdoor unit may further include a third connection valve which is opened so that at least some of the refrigerant flowing through the indoor unit gas pipe flows to the GHP gas pipe and the engine part circulation pipe, and a fourth circulation valve which is opened so that the refrigerant flowing through the engine part circulation pipe flows to the GHP liquid pipe and the indoor unit liquid pipe.

The engine part may include an engine which generates driving force through burning of a fuel, and a governor which controls an amount of the fuel supplied to the engine.

The governor may include a zero-governor which constantly controls an outlet pressure to constantly supply the fuel to the engine.

The engine may further include an oil pan in which engine oil is accommodated, and the third circulation pipe may be connected to the oil pan.

The third circulation pipe may be connected with the governor to heat the combustion gas.

### BRIEF DESCRIPTION OF THE DRAWINGS

Embodiments will be described in detail with reference to the following drawings in which like reference numerals refer to like elements, and wherein:
Fig. 1 is a configuration view of an air conditioner according to one embodiment of the present invention;
Fig. 2 is a detailed configuration view of the air conditioner of FIG. 1; and
FIG. 3 is a view illustrating an operation of the air conditioner of FIG. 2.

### DETAILED DESCRIPTION

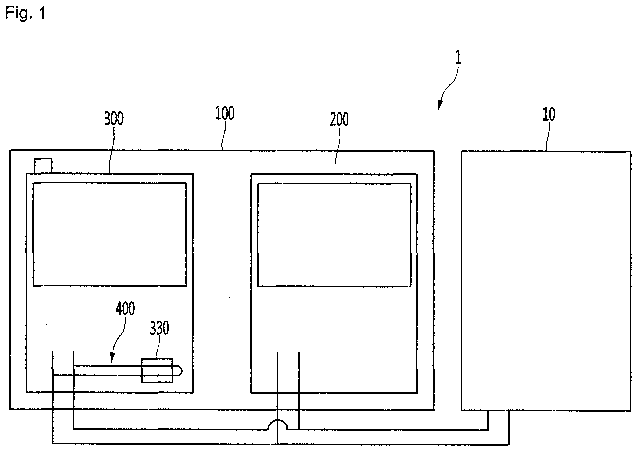

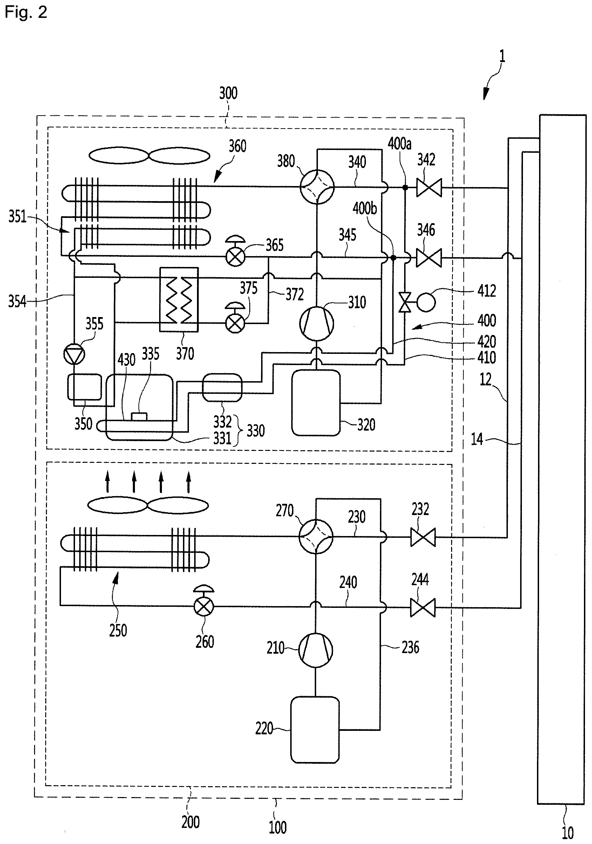

Fig. 1 is a system view of an air conditioner according to one embodiment of the present invention, and Fig. 2 is a detailed system view of the air conditioner of FIG. 1.

Referring to FIGS.1 and 2, an air conditioner 1 includes an indoor unit 10 and an outdoor unit 100.

One or a plurality of indoor units 10 may be provided. That is, at least one or more indoor units 10 may be provided. The at least one indoor unit 10 is connected to the outdoor unit 100, and may cool or warm an interior, or may purify indoor air.

The indoor unit 10 includes one pair of indoor unit pipes 12 and 14 for connection with the outdoor unit 100. The pair of indoor unit pipes 12 and 14 includes an indoor unit gas pipe 12, which connects an electric heat pump (EHP) gas pipe 230 and a gas heat pump (GHP) gas pipe 340, which will be described later, and an indoor unit liquid pipe 14, which connects an EHP liquid pipe 240 and a GHP liquid pipe 345, which will be described later.

The outdoor unit 100 is connected to the indoor unit 10, and performs compressing, expanding or the like of a refrigerant so as to sufficiently exchange heat. A plurality of outdoor units 100 may be provided. Hereinafter, for convenience of explanation, an example in which one pair of outdoor units 100 is provided will be described.

The pair of outdoor units 100 includes an EHP outdoor unit 200, which forms an EHP, and a GHP outdoor unit 300, which forms a GHP using a gas fuel such as LPG and LNG.

The EHP outdoor unit 200 is an outdoor unit which is operated in a EHP method, and includes a first compressor 210, a first accumulator 220, the EHP gas pipe 230, the EHP liquid pipe 240, one pair of connection valves 232 and 244, a first outdoor heat exchanger 250, a first outdoor heat exchanger control valve 260 and a first four-way valve 270.

The first compressor 210 is an element for compressing the refrigerant, and is driven through applying of a voltage. When the voltage is applied to the first compressor 210, the first compressor 210 may compress the refrigerant. Since the first compressor 210 is driven through the applying of the voltage, it has less of an effect on external air, and it is appropriate to respond to a partial load.

The first accumulator 220 is an element which is installed at a suction side of the first compressor 210 to supply the refrigerant to the first compressor 210. Specifically, when the refrigerant flows back in the first compressor 210, or a liquid refrigerant is suctioned into the first compressor 210, the first compressor 210 may be damaged, and thus the first accumulator 220 serves to temporarily store a mixture of oil and the refrigerant.

The EHP gas pipe 230 is installed at a discharge side of the first compressor 210, and connects the first compressor 210 with the at least one indoor unit 10. Specifically, the EHP gas pipe 230 connects the first compressor 210 with the indoor unit gas pipe 12.

The EHP liquid pipe 240 connects one side of the first outdoor heat exchanger 250 with the at least one indoor unit 10. Specifically, the EHP liquid pipe 240 connects the first outdoor heat exchanger 250 with the indoor unit liquid pipe 14.

The pair of connection valves 232 and 244 is an element for connection with the indoor unit 10. The pair of connection valves 232 and 244 includes a first connection valve 232, which connects the EHP gas pipe 230 with the indoor unit gas pipe 12, and a second connection valve 244, which connects the EHP liquid pipe 240 with the indoor unit liquid pipe 14.

The first outdoor heat exchanger 250 is an element which evaporates or condenses the refrigerant according to warming and cooling operations of the air conditioner 1. Specifically, when the air conditioner 1 performs the cooling operation, the refrigerant is condensed, and when air conditioner 1 performs the warming operation, the refrigerant is evaporated. An outdoor fan which blows air may be installed at one side of the first outdoor heat exchanger 250.

The first outdoor heat exchanger control valve 260 is an element which controls a flow of the refrigerant to the first outdoor heat exchanger 250. For example, the first outdoor heat exchanger control valve 260 may include an electronic expansion valve (EEV).

An opening degree of the first outdoor heat exchanger control valve 260 may be controlled according to whether the air conditioner 1 performs the warming or cooling operation.

For example, when the air conditioner 1 performs the cooling operation, the refrigerant condensed in the first outdoor heat exchanger 250 passes through the first outdoor heat exchanger control valve 260, and flows toward the indoor unit 10, and the opening degree of the first outdoor heat exchanger control valve 260 is controlled so that the refrigerant is not decompressed.

As another example, when the air conditioner 1 performs the warming operation, the refrigerant condensed in the indoor unit 10 passes through the first outdoor heat exchanger control valve 260, and flows toward the first outdoor heat exchanger 250, and the opening degree of the first outdoor heat exchanger control valve 260 may be controlled so that the refrigerant is decompressed.

The first four-way valve 270 is an element which switches a path of the refrigerant flowing in the EHP outdoor unit 200. When the air conditioner 1 performs the cooling operation, the first four-way valve 270 is operated to guide the refrigerant compressed in the first compressor 210 to the first outdoor heat exchanger 250. However, when the air conditioner 1 performs the warming operation, the first four-way valve 270 is operated to guide the refrigerant compressed in the first compressor 210 to the indoor unit 10.

The EHP gas pipe 230 is a discharge side pipe of the first compressor 210, and may extend to the first connection valve 232 via the first four-way valve.

The GHP outdoor unit 300 is an outdoor unit which is operated in a GHP method, and includes a second compressor 310, a second accumulator 320, an engine part 330, the GHP gas pipe 340, the GHP liquid pipe 345, one pair of connection valves 342 and 346, a cooling water heat exchanger 350, a cooling water pump 355, a second outdoor heat exchanger 360, a second outdoor heat exchanger control valve 365, a plate type heat exchanger 370, a plate type heat exchanger control valve 375, a second four-way valve 380, and an engine part circulation pipe 400.

It may be understood that the GHP gas pipe 340 and the GHP liquid pipe 345 are parts of a refrigerant pipe provided at the GHP outdoor unit 300. Specifically, the GHP gas pipe 340 may connect a discharge side of the second compressor 310 with the indoor unit 10, and the GHP liquid pipe 345 may connect the second outdoor heat exchanger 360 with the indoor unit 10.

The second compressor 310 is an element for compressing the refrigerant, and is operated through driving of an engine 331 of the engine part 330, which will be described later. When a driving force is transmitted to the second compressor 310 through the engine 331, the second compressor 310 may compress the refrigerant.

The second accumulator 320 is an element which supplies the refrigerant to the second compressor 310. When the refrigerant flows back in the second compressor 310, or the liquid refrigerant is suctioned into the second compressor 310, the second compressor 310 may be damaged, and thus the second accumulator 320 serves to temporarily store the mixture of the oil and the refrigerant.

The engine part 330 includes the engine 331 and a governor 332.

The engine 331 is an element which transmits the driving force to the second compressor 310, and is operated through burning of the gas fuel such as LPG and LNG. The GHP outdoor unit 300 is operated in the GHP method by combustion gas through the engine part 330.

Meanwhile, the governor 332 serves to adjust an amount of the fuel supplied to the engine 331. Specifically, the GHP outdoor unit 300 includes an air supply unit and a fuel supply unit which supply a mixed fuel to the engine 331, and a mixer which mixes the air and the fuel.

The air supply unit may include an air filter, which purifies the air. And the fuel supply unit includes the governor 332, which supplies the fuel having a predetermined pressure.

For example, the governor 332 may include a zero-governor which constantly supplies the fuel to the engine 331. It may be understood that the zero-governor is a device which constantly controls an outlet pressure of the fuel regardless of an inlet pressure or a flow rate of the fuel and then supplies the fuel. For example, the zero-governor may include a nozzle part which decompresses a pressure of the fuel, a diaphragm on which the pressure decompressed at the nozzle part acts, and a valve unit which is opened or closed by an operation of the diaphragm.

The air passed through the air filter and the fuel discharged from the zero-governor may be mixed in the mixer, and (the mixed fuel) may be supplied to the engine 331.

The engine part circulation pipe 400 is connected with the engine part 330, and heats the engine part 330 using the refrigerant discharged from the first compressor 210 of the EHP outdoor unit 200.

More specifically, the engine part circulation pipe 400 circulates the refrigerant discharged from the first compressor 210 of the EHP outdoor unit 200 to the engine part 330, and then transfers the refrigerant to the EHP outdoor unit 200 again.

At this time, the engine part circulation pipe 400 may be disposed to be in contact with or close to an outer surface of the engine 331 to supply heat thereto.

More specifically, the engine part circulation pipe 400 may be connected with an oil pan 335 which stores engine oil of the engine 331, and may heat the engine oil stored in the oil pan 335. For example, the engine part circulation pipe 400 may be installed to be in contact with or close to the oil pan 335.

Also, the engine part circulation pipe 400 may be connected with the governor 332 so as to supply heat to the governor 332, and may heat the fuel passing through the governor 332.

Meanwhile, the engine part circulation pipe 400 includes a first end 400a which is coupled to the GHP gas pipe 340 and a second end 400b which is coupled to the GHP liquid pipe 345. That is, the engine part circulation pipe 400 extends from the GHP gas pipe 340 at the first end 400a, and passes through the engine part 330, and the second end 400b thereof is coupled to the GHP liquid pipe 345.

The first end 400a may correspond to one point of the GHP gas pipe 340 to which the engine part circulation pipe 400 is connected, and the second end 400b may correspond to one point of the GHP liquid pipe 345 to which the engine part circulation pipe 400 is connected.

The engine part circulation pipe 400 includes a first circulation pipe 410, a second circulation pipe 420, and a third circulation pipe 430.

The first circulation pipe 410 is connected to the GHP gas pipe 340, and extends to one side of the engine part 330. The first circulation pipe 410 includes the first end 400a.

The second circulation pipe 420 is connected to the GHP liquid pipe 345, and extends to the other side of the engine part 330. The second circulation pipe 420 includes the second end 400b.

The third circulation pipe 430 is connected to the first and second circulation pipes 410 and 420. For example, both ends of the third circulation pipe 430 are connected to the first circulation pipe 410 and the second circulation pipe 420, respectively.

The third circulation pipe 430 is connected to the engine part 330. Specifically, the third circulation pipe 430 may be disposed to be in contact with or close to the engine 331 and the governor 332. The third circulation pipe 430 may provide heat of the refrigerant compressed in the first compressor 210 to the engine 331 and the governor 332.

A circulation control valve 412, which controls a supply amount or a flow rate of the refrigerant introduced from the first compressor 210 of the EHP outdoor unit 200, may be provided at the first circulation pipe 410 or the second circulation pipe 420. The drawing illustrates an example in which the circulation control valve 412 is installed at the first circulation pipe 410. However, the circulation control valve 412 may be installed at the second circulation pipe 420.

For example, the circulation control valve 412 may include an EEV which may control an opening degree, or a solenoid valve which may be turned on or off.

The GHP gas pipe 340 is an element for connection with the at least one indoor unit 10. Specifically, the GHP gas pipe 340 connects the second compressor 310 with the indoor unit gas pipe 12. That is, the GHP gas pipe 340 extends from a discharge side of the second compressor 310 to the indoor unit gas pipe 12.

The GHP liquid pipe 345 is an element for connection with the at least one indoor unit 10. Specifically, the GHP liquid pipe 345 connects the second outdoor heat exchanger 360 with the indoor unit liquid pipe 14.

The pair of connection valves 342 and 346 is an element for connection with the indoor unit 10. The pair of connection valves 342 and 346 includes a third connection valve 342 which connects a GHP gas pipe 340 with the indoor unit gas pipe 12, and a fourth connection valve 346 which connects the GHP liquid pipe 345 with the indoor unit liquid pipe 14.

The cooling water heat exchanger 350 is an element which is provided at one side of the engine 331 to cool the engine 331. The cooling water heat exchanger 350 serves to absorb heat of the engine 331, which is overheated according to the driving of the engine 331, using cooling water.

The GHP outdoor unit 300 further includes a cooling water pipe 354 which guides a flow of cooling water for cooling the engine 331. The cooling water pipe 354 is connected with the cooling water heat exchanger 350.

The cooling water pump 355, which generates a flowing force of the cooling water, and a radiator 351, which cools the cooling water, may be installed at the cooling water pipe 354.

The radiator 351 is provided at one side of the second outdoor heat exchanger 360, and the cooling water flowing through the radiator 351 may exchange heat with external air by driving of an outdoor fan 360a, and thus may be cooled. The cooling water passed through the cooling water pump 355 may pass through the cooling water pipe 354, and may be supplied to the cooling water heat exchanger 350.

The second outdoor heat exchanger 360 is an element which evaporates or condenses the refrigerant according to the warming and cooling operations of the air conditioner 1. Specifically, when the air conditioner 1 performs the cooling operation, the refrigerant is condensed, and when air conditioner 1 performs the warming operation, the refrigerant is evaporated. The outdoor fan 360a which blows the external air may be installed at one side of the second outdoor heat exchanger 360.

The second outdoor heat exchanger control valve 365 is an element which controls a flow of the refrigerant to the second outdoor heat exchanger 360, and is installed at the GHP liquid pipe 345. A description of the second outdoor heat exchanger control valve 365 is incorporated in that of the first outdoor heat exchanger control valve 260.

It is understood that the plate type heat exchanger 370 is a heat exchanger in which a low pressure refrigerant exchanges heat with high temperature cooling water. The cooling water may be cooled while exchanging heat in a plate type heat exchanger 370, and the refrigerant may be evaporated in this process.

The plate type heat exchanger control valve 375 is installed at a connection pipe 372 of the plate type heat exchanger 370, and controls a flow of the refrigerant to the plate type heat exchanger 370. The connection pipe 372 of the plate type heat exchanger 370 is branched from the GHP liquid pipe 345, and extends to the plate type heat exchanger 370. The plate type heat exchanger control valve 375 may be installed in parallel with the second outdoor heat exchanger control valve 365.

The second four-way valve 380 is an element which switches a path of the refrigerant flowing in the GHP outdoor unit 300. Description of the second four-way valve 380 is incorporated in that of the first four-way valve 270.

Hereinafter, an operation of the air conditioner 1 according to the embodiment will be described in detail.

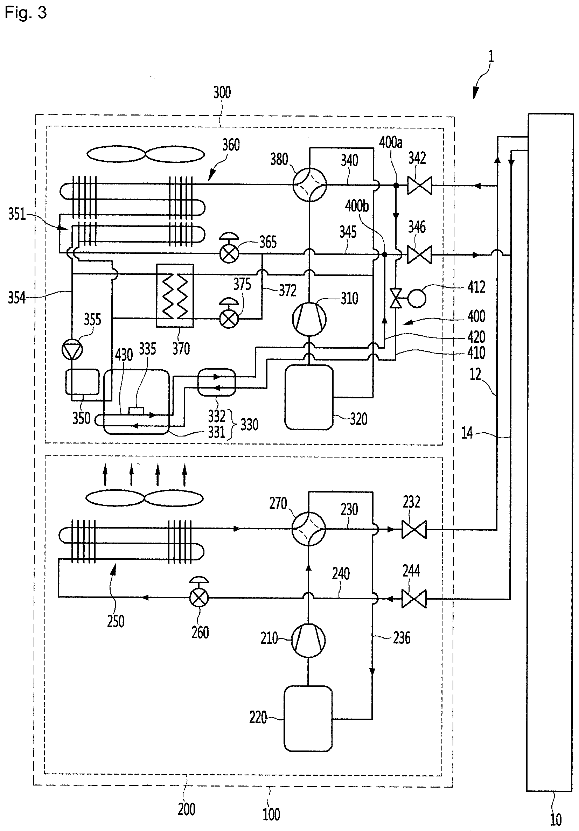

Fig. 3 is a view illustrating an operation of the air conditioner of FIG. 2.

Referring to FIG. 3, when the GHP outdoor unit 300 is unattended at a low temperature for a long period of time, the engine 331 is cooled, the engine oil in the oil pan 335 provided at the engine 331 is also cooled, and viscosity of the engine oil may be increased. This may cause startability of the engine 331 to be degraded, and may also cause engine life to be shortened.

Also, when the GHP outdoor unit 300 is unattended at a low temperature for a long period of time, the governor 332 and the gas fuel such as LPG or LNG may also be cooled, and an amount of the fuel supplied from the governor 332 to the engine 331 may be considerably reduced. In particular, LPG is not evaporated well at the low temperature. This phenomenon also leads to the problem in which the startability of the engine 331 is lowered.

Therefore, when the GHP outdoor unit 300 is in a condition which is unattended at the low temperature for a long period of time, first, the EHP outdoor unit 200 is driven, and the warming operation is performed. In the GHP outdoor unit 300, the third and fourth connection valves 346 are opened.

More specifically, the refrigerant discharged from the first compressor 210 of the EHP outdoor unit 200 flows along the EHP gas pipe 230, the first connection valve 232 and the indoor unit gas pipe 12. At this time, the first connection valve 232 may be opened so that the refrigerant compressed in the first compressor 210 flows to the indoor unit gas pipe 12.

At least some of the refrigerant in the EHP outdoor unit 200 which flows through the indoor unit gas pipe 12 is bypassed to the first circulation pipe 410 of the engine part circulation pipe 400 through the third connection valve 342 and the GHP gas pipe 340 of the GHP outdoor unit 300.

At this time, the circulation control valve 412 may be opened. An opening degree of the circulation control valve 412 may be controlled, and the supply amount or the flow rate of the refrigerant compressed in and discharged from the first compressor 210 of the EHP outdoor unit 200 may be appropriately controlled according to the opening degree of the circulation control valve 412.

The refrigerant flowing through the first circulation pipe 410 may flow, in turn, along the third circulation pipe 430 and the second circulation pipe 420. In this process, the refrigerant may exchange heat with the engine 331 and the governor 332, i.e., may supply heat to the engine 331 and the governor 332. Specifically, the refrigerant in the third circulation pipe 430, which is disposed to be in contact with or close to the engine 331 and the governor 332, may exchange heat with the engine 331 and the governor 332.

Therefore, the refrigerant supplied from the EHP outdoor unit 200 and circulated in the third circulation pipe 430 may provide heat to the engine 331 and the governor 332, and thus may heat the engine oil of the engine 331 or may provide heat to the fuel passing through the engine 331 and the governor 332.

The refrigerant in the third circulation pipe 430 heat-exchanged with the engine part 330 may be introduced again into the EHP outdoor unit 200 through the second circulation pipe 420, the GHP liquid pipe 345 of the GHP outdoor unit 300, the fourth connection valve 346 and the indoor unit liquid pipe 14. At this time, the second connection valve 244 may be opened so that the refrigerant flowing through the indoor unit liquid pipe 14 flows to the first outdoor heat exchanger 250.

According to the configuration of the air conditioner 1, when the EHP outdoor unit 200 performs the warming operation, the refrigerant compressed in and discharged from the first compressor 210 of the EHP outdoor unit 200 may be supplied to the GHP outdoor unit 300 through the engine part circulation pipe 400, and thus the frozen engine part 330 of the GHP outdoor unit 300 may be warmed.

That is, in the air conditioner 1 according to the embodiment, the startability problem of the engine 331 may be solved by heating the engine part 330 of the GHP outdoor unit 300 using the discharged heat of the EHP outdoor unit 200.

Therefore, the air conditioner 1 according to the embodiment may enhance the startability of the engine 331 and may extend the engine life.

The air conditioner of the present invention can enhance the startability of the engine and can also extend the engine life.

Specifically, when the EHP outdoor unit performs the warming operation, the refrigerant compressed in and discharged from the first compressor of the EHP outdoor unit can be supplied to the GHP outdoor unit through the engine part circulation pipe, and thus the frozen engine part of the GHP outdoor unit can be warmed.

Accordingly, since the engine part of the GHP outdoor unit can be heated using the discharged heat of the EHP outdoor unit, the startability problem of the engine can be solved.

## Claims

1. An air conditioner comprising:
at least one indoor unit (10);
an electric heat pump, EHP, outdoor unit (200) connected with the at least one indoor unit (10), and having a first compressor (210) driven by using electric power, and a first outdoor heat exchanger (250); and
a gas heat pump, GHP, outdoor unit (300) connected with the at least one indoor unit (10), and having an engine part (330) driven by using a combustion gas, a second compressor (310) driven by receiving driving force from the engine part (330), and a second outdoor heat exchanger (360),
wherein the GHP outdoor unit (300) comprises an engine part circulation pipe (400) in which a refrigerant flowing through the EHP outdoor unit (200) can be introduced and then supplied to the engine part (330) in order to heat the engine part (330).

2. The air conditioner according to claim 1, wherein the GHP outdoor unit (300) comprises:
a GHP gas pipe (340) that connects a discharge side of the second compressor (310) with the at least one indoor unit (10); and
a GHP liquid pipe (345) that connects the second outdoor heat exchanger (360) with the at least one indoor unit (10), and
wherein the engine part circulation pipe (400) is coupled to the GHP gas pipe (340) and the GHP liquid pipe (345).

3. The air conditioner according to claim 2, wherein the EHP outdoor unit (200) comprises:
an EHP gas pipe (230) that connects a discharge side of the first compressor (210) with the at least one indoor unit (10); and
an EHP liquid pipe (240) that connects the first outdoor heat exchanger (250) with the at least one indoor unit (10).

4. The air conditioner according to claim 3, further comprising:
an indoor unit gas pipe (12) that connects the EHP gas pipe (230) with the GHP gas pipe (340); and
an indoor unit liquid pipe (14) that connects the EHP liquid pipe (240) with the GHP liquid pipe (345).

5. The air conditioner according to claim 4, wherein the EHP outdoor unit (200) further comprises:
a first connection valve (232) that is opened to allow refrigerant compressed in the first compressor to flow to the indoor unit gas pipe (12); and
a second connection valve (244) that is opened to allow refrigerant flowing through the indoor unit (10) to flow to the first outdoor heat exchanger (250).

6. The air conditioner according to claim 5, wherein the GHP outdoor unit (300) further comprises:
a third connection valve (342) that is opened to allow at least some of refrigerant flowing through the indoor unit gas pipe (12) to flow to the GHP gas pipe (340) and the engine part circulation pipe (400); and
a fourth circulation valve (346) that is opened to allow refrigerant flowing through the engine part circulation pipe (400) to flow to the GHP liquid pipe (345) and the indoor unit liquid pipe (14).

7. The air conditioner according to any one of claims 2 to 6, wherein the engine part circulation pipe (400) comprises a first end (400a) which is coupled to the GHP gas pipe (340), and a second end (400b) which is coupled to the GHP liquid pipe (345).

8. The air conditioner according to any one of claim 2 to 7, wherein the GHP outdoor unit (300) comprises:
a first circulation pipe (410) that includes the first end (400a) and extends from the GHP gas pipe (340) to the engine part (330); and
a second circulation pipe (420) that includes the second end (400b) and extends from the GHP liquid pipe (345) to the engine part (330).

9. The air conditioner according to claim 8, wherein the GHP outdoor unit (300) further comprises a third circulation pipe (430) that is connected to the first circulation pipe (410) and the second circulation pipe (420) and exchanges heat with the engine part (330).

10. The air conditioner according to claim 9, wherein the third circulation pipe (430) is installed to be in contact with or close to the engine part (330).

11. The air conditioner according to any one of claims 8 to 10, further comprising a circulation control valve (412) that is installed at the first circulation pipe (410) or the second circulation pipe (420) and controls a flow rate of the refrigerant supplied from the EHP outdoor unit (200).

12. The air conditioner according to any one of the preceding claims, wherein the engine part (330) comprises:
an engine (331) that generates driving force through burning of a fuel; and
a governor (332) that controls an amount of the fuel supplied to the engine (331).

13. The air conditioner according to claim 12, wherein the governor (332) comprises a zero-governor that constantly controls an outlet pressure to constantly supply the fuel to the engine (331).

14. The air conditioner according to claim 12 or 13, wherein the engine (331) further comprises an oil pan (335) in which engine oil is accommodated, and the third circulation pipe (430) is connected to the oil pan (335).

15. The air conditioner according to claim 12, 13, or 14, wherein the third circulation pipe (430) is connected with the governor (332) to heat the combustion gas.

## Patentansprüche

1. Klimaanlage, die aufweist:
mindestens eine Inneneinheit (10);
eine elektrische Wärmepumpen-, EHP-, Außeneinheit (200), die mit der mindestens einen Inneneinheit (10) verbunden ist, und die einen ersten Verdichter (210), der mittels elektrischen Strom betrieben wird, und einen ersten Außenwärmetauscher (250) auf weist; und
eine Gaswärmepumpen-, GHP-, Außeneinheit (300), die mit der mindestens einen Inneneinheit (10) verbunden ist, und einen Motorteil (330), der mittels eines Verbrennungsgases betrieben wird, einen zweiten Verdichter (310), die durch Aufnahme einer Antriebskraft vom Motorteil (330) betrieben wird, und einen zweiten Außenwärmetauscher (360) aufweist,
wobei die GHP-Außeneinheit (300) eine Motorteilumwälzleitung (400) aufweist, in der ein Kältemittel, das durch die EHP-Außeneinheit (200) fließt, eingeleitet und dann dem Motorteil (330) zugeführt werden kann, um den Motorteil (330) zu erwärmen.

2. Klimaanlage nach Anspruch 1, wobei die GHP-Außeneinheit (300) aufweist:
eine GHP-Gasleitung (340), die eine Ausstoßseite des zweiten Verdichters (310) mit der mindestens einen Inneneinheit (10) verbindet; und
eine GHP-Flüssigkeitsleitung (345), die den zweiten Außenwärmetauscher (360) mit der mindestens einen Inneneinheit (10) verbindet, und
wobei die Motorteilumwälzleitung (400) mit der GHP-Gasleitung (340) und der GHP-Flüssigkeitsleitung (345) gekoppelt ist.

3. Klimaanlage nach Anspruch 2, wobei die EHP-Außeneinheit (200) aufweist:
eine EHP-Gasleitung (230), die eine Ausstoßseite des ersten Verdichters (210) mit der mindestens einen Inneneinheit (10) verbindet; und
eine EHP-Flüssigkeitsleitung (240), die den ersten Außenwärmetauscher (250) mit der mindestens einen Inneneinheit (10) verbindet.

4. Klimaanlage nach Anspruch 3, die ferner aufweist:
eine Inneneinheitsgasleitung (12), die die EHP-Gasleitung (230) mit der GHP-Gasleitung (340) verbindet; und
eine Inneneinheitsflüssigkeitsleitung (14), die die EHP-Flüssigkeitsleitung (240) mit der GHP-Flüssigkeitsleitung (345) verbindet.

5. Klimaanlage nach Anspruch 4, wobei die EHP-Außeneinheit (200) ferner aufweist:
ein erstes Verbindungsventil (232), das geöffnet wird, um im ersten Verdichter verdichtetes Kältemittel zur Inneneinheitsgasleitung (12) fließen zu lassen; und
ein zweites Verbindungsventil (244), das geöffnet wird, um durch die Inneneinheit (10) fließendes Kältemittel zur ersten Außenwärmetauscher (250) fließen zu lassen.

6. Klimaanlage nach Anspruch 5, wobei die GHP-Außeneinheit (300) ferner aufweist:
ein drittes Verbindungsventil (342), das geöffnet wird, um mindestens etwas des durch die Inneneinheitsgasleitung (12) fließenden Kältemittels zur GHP-Gasleitung (340) und zur Motorteilumwälzleitung (400) fließen zu lassen; und
eine viertes Umwälzventil (346), das geöffnet wird, um durch die Motorteilumwälzleitung (400) fließendes Kältemittel zur GHP-Flüssigkeitsleitung (345) und zur Inneneinheitsflüssigkeitsleitung (14) fließen zu lassen.

7. Klimaanlage nach einem der Ansprüche 2 bis 6, wobei die Motorteilumwälzleitung (400) ein erstes Ende (400a), das mit der GHP-Gasleitung (340) gekoppelt ist, und ein zweites Ende (400b) aufweist, das mit der GHP-Flüssigkeitsleitung (345) gekoppelt ist.

8. Klimaanlage nach einem der Ansprüche 2 bis 7, wobei die GHP-Außeneinheit (300) aufweist:
eine erste Umwälzleitung (410), die das erste Ende (400a) aufweist und sich von der GHP-Gasleitung (340) zum Motorteil (330) erstreckt; und
eine zweite Umwälzleitung (420), die das zweite Ende (400b) aufweist und sich von der GHP-Flüssigkeitsleitung (345) zum Motorteil (330) erstreckt.

9. Klimaanlage nach Anspruch 8, wobei die GHP-Außeneinheit (300) ferner eine dritte Umwälzleitung (430) aufweist, die mit der ersten Umwälzleitung (410) und der zweiten Umwälzleitung (420) verbunden ist und Wärme mit dem Motorteil (330) austauscht.

10. Klimaanlage nach Anspruch 9, wobei die dritte Umwälzleitung (430) so installiert ist, dass sie mit dem Motorteil (330) in Kontakt steht oder ihm nahe ist.

11. Klimaanlage nach einem der Ansprüche 8 bis 10, die ferner ein Umwälzsteuerventil (412) aufweist, das an der ersten Umwälzleitung (410) oder der zweiten Umwälzleitung (420) installiert ist und eine Durchflussmenge des von der EHP-Außeneinheit (200) zugeführten Kältemittels steuert.

12. Klimaanlage nach einem der vorhergehenden Ansprüche, wobei der Motorteil (330) aufweist:
einen Motor (331), der eine Antriebskraft durch Verbrennen eines Kraftstoffs erzeugt; und
einen Regler (332), der eine Menge des Kraftstoffs regelt, die dem Motor (331) zugeführt wird.

13. Klimaanlage nach Anspruch 12, wobei der Regler (332) einen Nulldruckregler aufweist, der einen Auslassdruck konstant regelt, um dem Motor (331) konstant Kraftstoff zuzuführen.

14. Klimaanlage nach Anspruch 12 oder 13, wobei der Motor (331) ferner eine Ölwanne (335) aufweist, in der Motoröl aufgenommen wird, und die dritte Umwälzleitung (430) mit der Ölwanne (335) verbunden ist.

15. Klimaanlage nach Anspruch 12, 13, oder 14, wobei die dritte Umwälzleitung (430) mit dem Regler (332) verbunden ist, um das Verbrennungsgas zu erwärmen.

## Revendications

1. Climatiseur, comprenant :
au moins une unité intérieure (10) ;
une unité extérieure à pompe à chaleur électrique, EHP, (200) reliée à ladite au moins une unité intérieure (10), et comportant un premier compresseur (210) entraîné par courant électrique et un premier échangeur de chaleur extérieur (250) ; et
une unité extérieure à pompe à chaleur à gaz, GHP, (300) reliée à ladite au moins une unité intérieure (10), et pourvue d'un module moteur (330) entraîné par gaz de combustion, d'un deuxième compresseur (310) entraîné par la force d'entraînement du module moteur (330), et d'un deuxième échangeur de chaleur extérieur (360),
l'unité extérieure GHP (300) comprenant une conduite de circulation (400) de module moteur où peut être introduit un réfrigérant s'écoulant dans l'unité extérieure EHP (200) avant d'être refoulé vers le module moteur (330) afin de chauffer le module moteur (330).

2. Climatiseur selon la revendication 1, où l'unité extérieure GHP (300) comprend :
une conduite de gaz GHP (340) reliant un côté d'évacuation du deuxième compresseur (310) à ladite au moins une unité intérieure (10) ; et
une conduite de liquide GHP (345) reliant le deuxième échangeur de chaleur extérieur (360) à ladite au moins une unité intérieure (10), et
où la conduite de circulation (400) de module moteur est reliée à la conduite de gaz GHP (340) et à la conduite de liquide GHP (345).

3. Climatiseur selon la revendication 2, où l'unité extérieure EHP (200) comprend :
une conduite de gaz EHP (230) reliant un côté d'évacuation du premier compresseur (210) à ladite au moins une unité intérieure (10) ; et
une conduite de liquide EHP (240) reliant le premier échangeur de chaleur extérieur (250) à ladite au moins une unité intérieure (10).

4. Climatiseur selon la revendication 3, comprenant en outre :
une conduite de gaz (12) d'unité intérieure reliant la conduite de gaz EHP (230) à la conduite de gaz GHP (340) ; et
une conduite de liquide (14) d'unité intérieure reliant la conduite de liquide EHP (240) à la conduite de liquide GHP (345).

5. Climatiseur selon la revendication 4, où l'unité extérieure EHP (200) comprend en outre :
une première vanne de connexion (232) ouverte pour permettre au réfrigérant comprimé dans le premier compresseur de s'écouler vers la conduite de gaz (12) d'unité intérieure ; et
une deuxième vanne de connexion (244) ouverte pour permettre au réfrigérant circulant dans l'unité intérieure (10) de s'écouler vers le premier échangeur de chaleur extérieur (250).

6. Climatiseur selon la revendication 5, où l'unité extérieure GHP (300) comprend en outre :
une troisième vanne de connexion (342) ouverte pour permettre au moins une partie du réfrigérant circulant dans la conduite de gaz (12) d'unité intérieure de s'écouler vers la conduite de gaz GHP (340) et la conduite de circulation (400) de module moteur ; et
une quatrième vanne de circulation (346) ouverte pour permettre au réfrigérant circulant dans la conduite de circulation (400) de module moteur de s'écouler vers la conduite de liquide GHP (345) et la conduite de liquide (14) d'unité intérieure.

7. Climatiseur selon l'une des revendications 2 à 6, où la conduite de circulation (400) de module moteur présente une première extrémité (400a) reliée à la conduite de gaz GHP (340), et une deuxième extrémité (400b) reliée à la conduite de liquide GHP (345).

8. Climatiseur selon l'une des revendications 2 à 7, où l'unité extérieure GHP (300) comprend :
une première conduite de circulation (410) présentant la première extrémité (400a) et s'étendant de la conduite de gaz GHP (340) au module moteur (330) ; et
une deuxième conduite de circulation (420) présentant la deuxième extrémité (400b) et s'étendant de la conduite de liquide GHP (345) au module moteur (330).

9. Climatiseur selon la revendication 8, où l'unité extérieure GHP (300) comprend en outre une troisième conduite de circulation (430) reliée à la première conduite de circulation (410) et à la deuxième conduite de circulation (420) et échangeant de la chaleur avec le module moteur (330).

10. Climatiseur selon la revendication 9, où la troisième conduite de circulation (430) est montée de manière à être en contact avec le module moteur (330), ou à être proche de celui-ci.

11. Climatiseur selon l'une des revendications 8 à 10, comprenant en outre une vanne de commande de circulation (412) montée sur la première conduite de circulation (410) ou la deuxième conduite de circulation (420) et commandant le débit du réfrigérant refoulé par l'unité extérieure EHP (200).

12. Climatiseur selon l'une des revendications précédentes, où le module moteur (330) comprend :
un moteur (331) générant une force d'entraînement par combustion d'un carburant ; et
un régulateur (332) commandant une quantité du carburant alimentant le moteur (331).

13. Climatiseur selon la revendication 12, où le régulateur (332) comprend un régulateur zéro qui commande de manière continue une pression de sortie pour l'alimentation continue du moteur (331) en carburant.

14. Climatiseur selon la revendication 12 ou la revendication 13, où le moteur (331) comprend en outre un carter d'huile (335) où est contenue l'huile du moteur, et où la troisième conduite de circulation (430) est reliée au carter d'huile (335).

15. Climatiseur selon la revendication 12, la revendication 13 ou la revendication 14, où la troisième conduite de circulation (430) est reliée au régulateur (332) pour chauffer le gaz de combustion.
